# EUROPEAN PATENT SPECIFICATION

(11) **EP 3 896 297 B1**
(45) Date of publication and mention of the grant of the patent: **13.08.2025**
(21) Application number: 21168835.3
(22) Date of filing: 16.04.2021
(51) Int. Cl.: F16B 5/02, F16B 13/12, E04B 1/76, E04D 3/36, F16B 43/00

(54) **FASTENER, FASTENING KIT, AND METHOD OF FASTENING A COVERING LAYER TO A RECEIVING STRUCTURE**
BEFESTIGUNG, BEFESTIGUNGSKIT UND VERFAHREN ZUR BEFESTIGUNG EINER DECKSCHICHT AN EINER AUFNAHMESTRUKTUR
FIXATION, KIT DE FIXATION ET PROCEDE DE FIXATION D'UNE COUCHE DE RECOUVREMENT A UNE STRUCTURE DE RECEPTION

(30) Priority: 16.04.2020 FI 20205387
(43) Date of publication of application: 20.10.2021
(73) Proprietor: VILPE Oy, 65610 Mustasaari (FI)
(72) Inventor: SAIKKONEN, Eero, 65610 Mustasaari (FI)
(74) Representative: Laine IP Oy

(56) References cited:
- EP-A1- 3 406 816
- EP-A1- 3 462 044
- DE-A1- 19 846 204
- FR-A1- 2 650 642

## Description

### TECHNICAL FIELD

The present invention relates to auxiliary equipment for building technology. The present invention is especially related to a fastening kit for fastening a covering layer to a receiving structure.

### BACKGROUND

In construction work there often arises a need to fasten relatively soft covering layers to relatively hard structures. Fastening insulation boards to a concrete wall is an example of such need. Usually fasteners based on various screws or nails are used, the screws and nails being screwed or hammered into the receiving structure either directly or via a wall plug. The fasteners usually comprise a relatively large end flange for maximizing the area contacting the relatively soft covering layer.

However, the receiving structures and covering layers are not always completely flat. Therefore a sufficiently deep hole must often be bored into the receiving structure for allowing height adjustment of the screw, which requires additional work. However, adjustable fasteners are known in prior art. One such fastener is described in publication EP 2366843 A1. The known adjustable fasteners often require using a fairly large sleeve and adjustment shims. This increases the challenges on logistics, when products are stored and transported before and after selling.

EP 3462044 A1 discloses a fastener for fastening insulation panels to roofs. The fastener has a screw extending through a flanged sleeve, the depth of which is adjusted through rotation by a separate tool, such as a hex key, after fastening the screw to the roof.

Because of this it would be advantageous to provide a fastener with reliable grip on the receiving structure and that is relatively freely adjustable, or at least a useful alternative to known fasteners. It would be especially advantageous to provide an adjustable fastener with efficient use of space as far as logistics is concerned.

### SUMMARY

The present invention provides a fastening kit with a fastener, according to claim 1, the kit comprising also a tool comprising a shaft and a bit. The fastener comprises a sleeve and a screw for fastening a covering layer to a receiving structure. A channel having a first section, which has a non-circular, i.e. non-rotationally symmetrical, cross-section, and a second section extends through the elongated body of the sleeve. The body which extends between a tip and an end flange, wherein the diameter of the end flange is larger than the diameter of the body. The screw comprises a threaded shank that can be arranged into the first and second section of the channel, and a head arranged at the end of the shank and that can be slidably arranged into the first section of the channel. There is a thread fit between the shank of the screw and the second portion of the sleeve. The shaft of the tool comprises a non-circular, i.e. non-rotationally symmetrical cross-section shape, corresponding with the corresponding cross-section form of the first section of the channel of the sleeve, whereby the shaft can be arranged into the first section of the channel slidably in axial direction and form-lockingly in rotational direction. The bit of the tool is arranged to at the end of the shaft to connect with the head of the screw for rotating the screw into the receiving structure. The relative position of the sleeve and the screw is axially adjustable by rotating the sleeve in relation to the screw by means of the shaft of the tool, when the bit of the tool is not in contact with the head of the screw.

The invention also relates to a method of fastening the covering layer to a receiving structure, according to claim 13. In the method, the covering layer is placed onto the receiving structure and the said fastening kit is utilized by connecting the bit of the torque tool to the head of the screw and rotating the screw through the covering layer into the receiving structure. The end flange or washer of the sleeve is adjusted to contact the covering layer by pulling the bit of the torque tool off from the head of the screw and by rotating the sleeve in relation to the screw by means the shaft of the torque tool.

The invention is characterized by the independent claims.

The numerous embodiments of the novel solutions can comprise one or more features from the following list:
- the second section of the channel is rotationally symmetrical, i.e. circular, in cross-section,
- the first section has a first inner diameter,
- the second section has a second inner diameter, smaller than the first inner diameter,
- the diameter of the head of the screw is larger than the second inner diameter of the second section of the channel,
- the cross-section of the first section is polygonal in form,
- the head of the screw can't be arranged into the second portion of the channel,
- the channel comprises a third section arranged at the area of the end flange, the section being rotationally symmetrical, i.e. circular in cross-section,
- the second section of the channel is arranged within the area of the tip of the body,
- the first section is arranged between the second section and the third section,
- the fastener comprises a washer separate from the sleeve,
- the washer comprises an outer ring,
- the washer comprises an inner ring,
- the inner ring is radially within the outer ring,
- the inner ring comprises an inner edge limiting the opening for receiving the body of the sleeve,
- the washer comprises a first side and a second side, reverse in relation to the first side,
- the inner ring is arranged to receive the end flange of the sleeve on the first side of the washer,
- the washer comprises an isthmus part connecting the outer ring with the inner ring,
- the isthmus part comprises openings for increasing the flexibility of the washer,
- the washer is arranged to receive the sleeve in axial direction, wherein the outer ring of the washer is offset from the inner ring,
- the outer ring of the washer is arranged to be supported on one side by the covering layer by a first area, larger than the second area, by which the end flange of the sleeve is supported by the inner ring of the washer.

Considerable advantages are achieved by means of the invention. The novel fastener construction enables adjustment of the fastener so that the covering layer to be installed is positioned tightly against the receiving structure. This is made possible by the adjustment of the axial position between the sleeve and the screw.

On the other hand, the construction allows using a separate cover plate. In the case of a separate cover plate the size of the area contacting the covering layer can on one hand be maximized, and on the other hand the size of a disassembled fastener in a package can be minimized, which reduces the pressure on logistics. Compared with conventional fasteners having a large end flange their packability on a pallet is much better than that of prior art. On the other hand, the construction allows efficient modularity by making it possible to provide a large range of fasteners designed for covering layers of different sizes by varying the length of the sleeve, whereby the screw and the possible separate cover plate can be standardized. This further improves the storage and transport efficiency of the fastener, as contractors are required e.g. to keep only one size of screws and washers in their inventory in addition to different sizes of sleeves. The advantage is especially obvious in situations where the contractor maintains their inventory in e.g. a drawer storage installed in the load compartment of a van, as these are usually quite small.

### BRIEF DESCRIPTION OF DRAWINGS

In the following, some embodiments of the invention are disclosed in more detail by means of reference to the appended drawings, in which:
- FIGURE 1: is a side view of a fastener of the fastening kit according to one embodiment,
- FIGURE 2: is a cross-sectional view of the fastener of FIGURE 1,
- FIGURE 3: is a cross-sectional view showing installation of the fastener of FIGURE 1 as a part of fastening kit in two stages,
- FIGURE 4A: is a perspective view of a fastener according to another embodiment without the screw,
- FIGURE 4B: is a side view of the fastener of FIGURE 4A,
- FIGURE 5A: is a side view of the sleeve of the fastener of FIGURE 4A,
- FIGURE 5B: is a cross-sectional view along the line A-A of the sleeve according to FIGURE 5A,

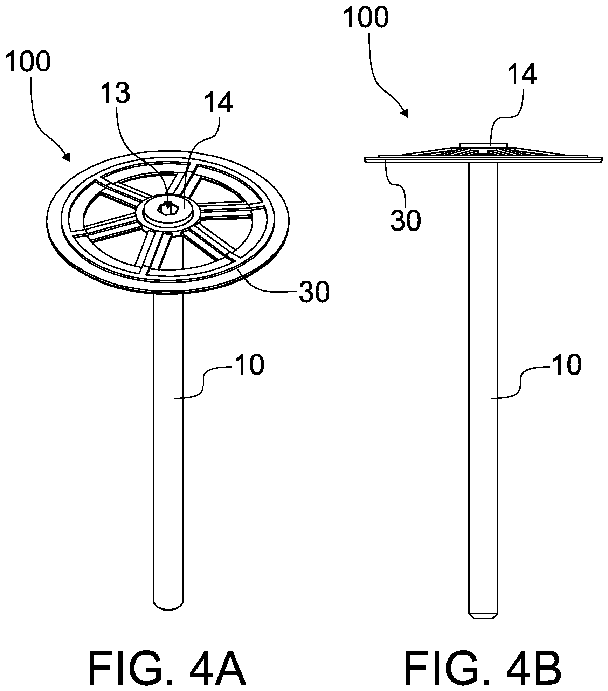

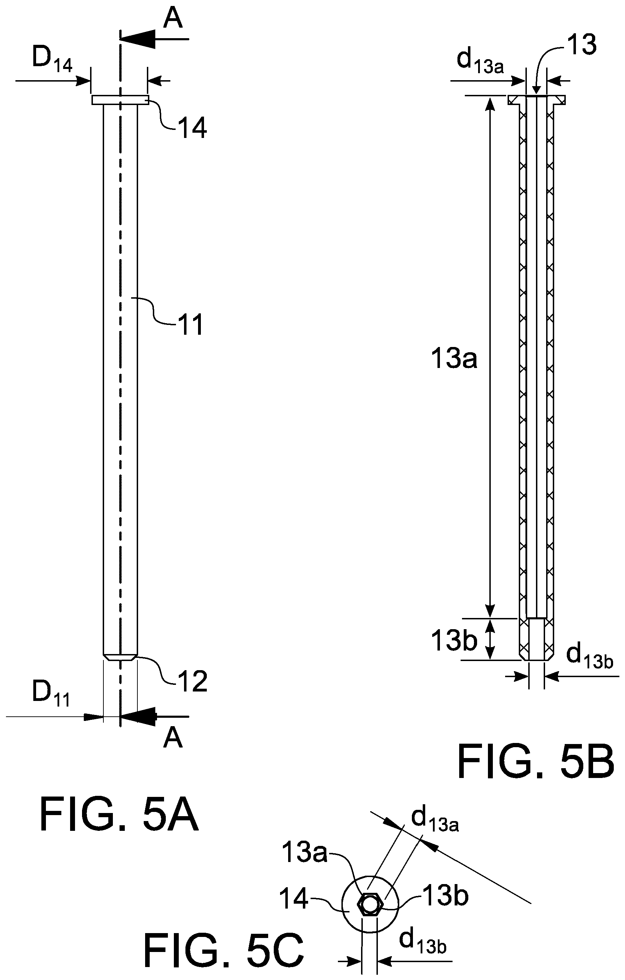

- FIGURE 4B: is an end view of the sleeve of FIGURE 5A,

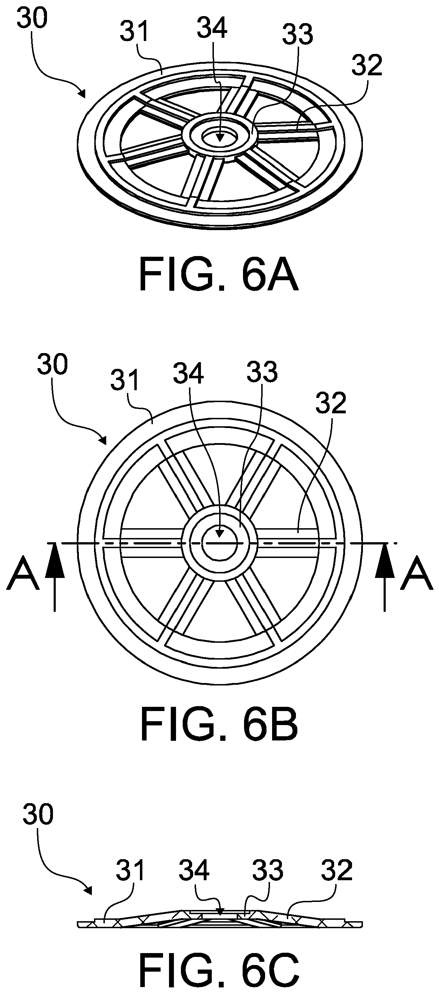

- FIGURE 6a: is a perspective view of the washer of the fastener of FIGURE 4A,
- FIGURE 6B: is an end view of the washer of FIGURE 6A,
- FIGURE 6C: is a cross-sectional view along the line A-A of the washer according to FIGURE 6B,

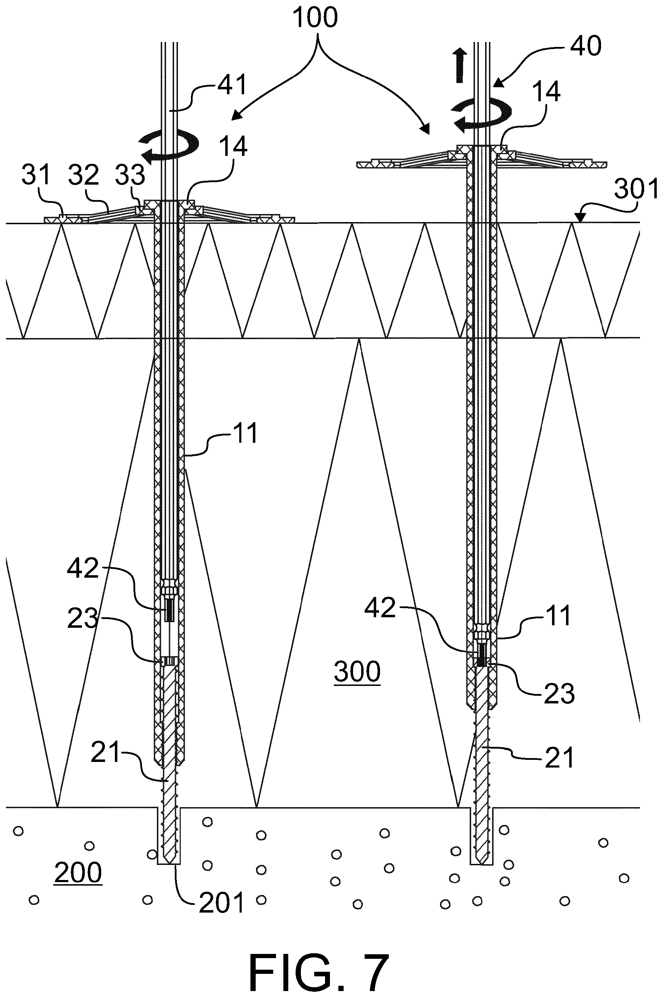

- FIGURE 7: is a cross-sectional view showing installation of the fastener of FIGURE 4A as a part of fastening kit in two stages,

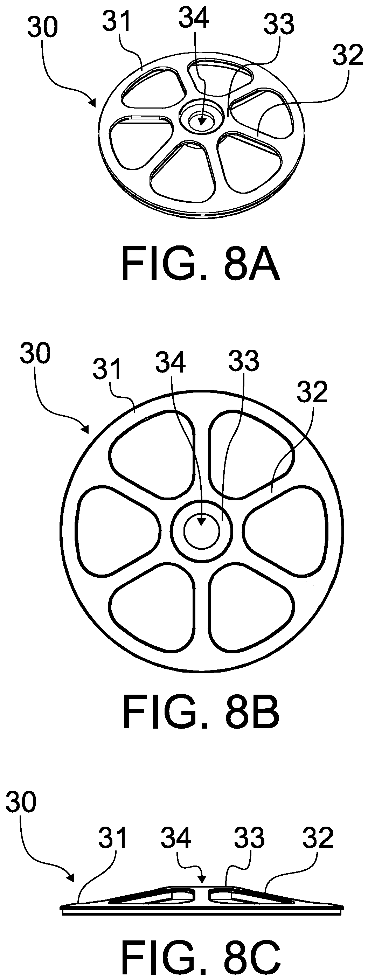

- FIGURE 8A: is an alternative version of the washer of FIGURE 6A,
- FIGURE 8B: is an alternative version of the washer of FIGURE 6B,
- FIGURE 8C: is an end view of the washer of FIGURE 8A and

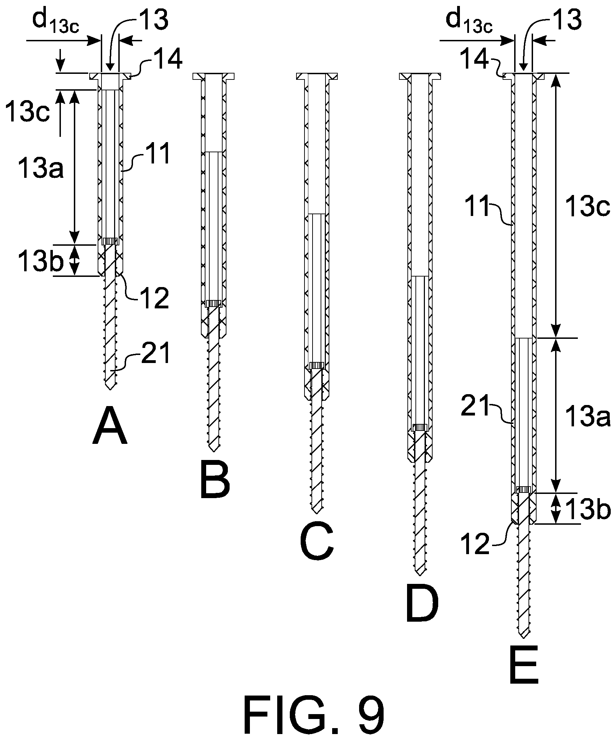

- FIGURE 9: is a cross-sectional view of a range of fasteners provided with sleeves of different sizes without the washer.

### EMBODIMENTS

In this context the terms "circular in cross-section" and "rotationally symmetrical in cross-section" are synonymous with each other.

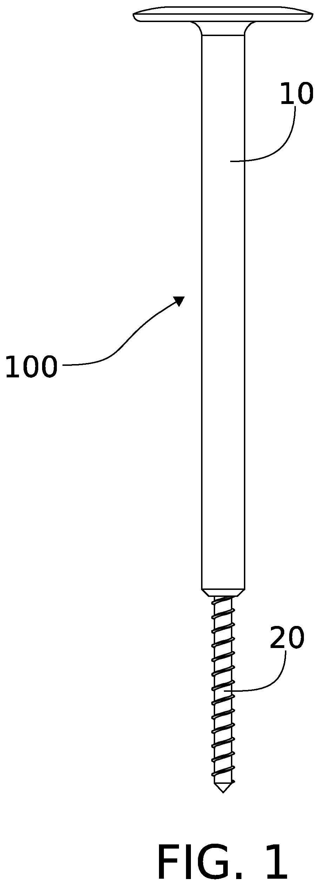

FIGURES 1 to 3 show a first fastening kit according to the first embodiment for fastening the covering layer 300 to the receiving structure 200. The covering layer 300 can be, for example, an insulation or acoustic board fastened to the wall. The insulation board can be e.g. a sheet pressed into a board from mineral or glass wool or styrofoam polyurethane. Usually the insulation boards to be fastened are 240mm or less in thickness, such as 220mm. More generally the fastening kit is designed to fasten slab-like or layered slab-like pieces to vertical surfaces. In the embodiment of FIGURES 1 to 3 the fastening kit comprises a fastener 100 and a torque tool 40. The fastener 100 comprises a sleeve 10 and a screw 20. FIGURES 4 to 7 show a first fastening kit according to the second embodiment for fastening the covering layer 300 to the receiving structure 200. In this embodiment the fastener 100 also comprises a washer 30.

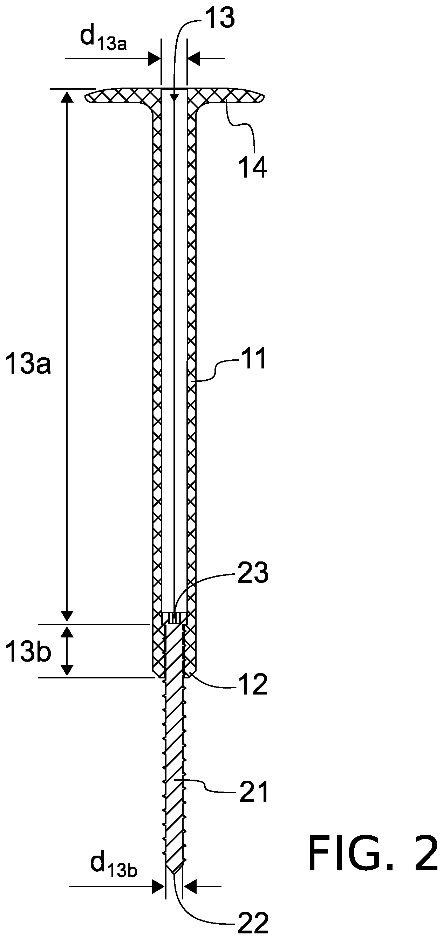

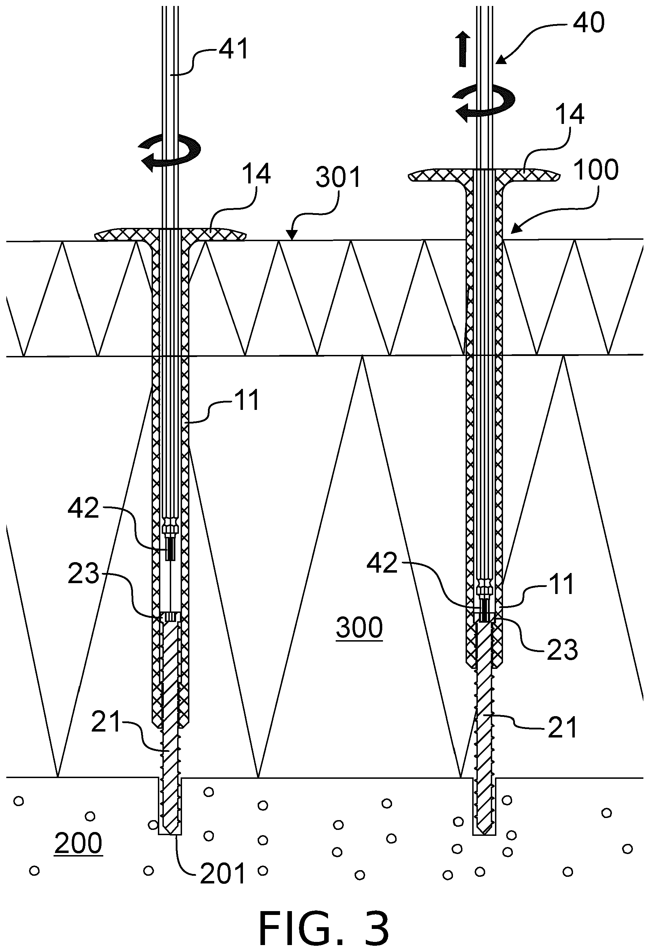

FIGURES 1 and 2 show the fastener 100 according to the first embodiment and FIGURE 3 shows the two phases of installing the fastener 100. In the first embodiment the fastener 100 comprises two main components, the sleeve 10 and the screw 20, designed to cooperate with the sleeve 10. As can be seen, the shank 21 of the screw 20 provided with an external thread extends between the tip 22 and the head 23. The length of the shank 21 can be in the range of 50 to 100 mm, e.g. 70 mm, in measurement. The tip 22 arranged to the first end of the screw 20 can be sharp and cutting, as shown, whereby it is suitable for being screwed into, for example, a wooden wall, vertical stud, or a wall plug. Alternatively, the screw 20 can be a machine screw with a blunt tip. Preferably the thread portion continues along the whole length of the shank 21 from the head 23 to the tip 22. The end of the head 23 arranged at one end of the screw 20 is provided with a slot 24 connecting with the tool, the slot being a Torx slot in the example of FIGURE 4. Other tool slots, such as Phillips, Allen and the like are also possible.

The sleeve 10 can be made of injection moulded or 3D-printed polymer, for example, or other suitable formable material, such as metal or composite. The sleeve 10 comprises an elongated body 11 extending between the tip 12 and the end flange 14. The outer diameter of the tip 12 arranged at the first end of the body 10 is narrower than the rest of the body 11 for making it easier to install the sleeve 10 through the insulation layer. In the example of FIGURES 1 to 3 the end of the tip 12 is chamfered for providing a narrower outer diameter, but a tip 11 rounded or throughout narrower than the rest of the body 12 could be used. On the other hand, the end flange 14 arranged at the other end of the body 10 has a radially extending shape, with a larger outer diameter than the body 11 to prevent the sleeve 10 from penetrating the insulation layer.

A channel 13 runs through the body 11, the channel having a wide first section 13a and a narrow second section 13b. The first section 13a of the channel 13 can also be called the wide section and the second section 13b can be called the narrower section. In more detail, the inner diameter d₁₃ₐ of the first section 13a is larger than the diameter d_{13b} of the second diameter. In other words, the dimensions d₁₃ₐ and d_{13b} are the inner diameters of the sleeve 10. The purpose of the first section 13a is to allow axial movement of the screw 20 inside the channel 13, whereas the purpose of the second section 13b is to allow the movement of the shank 21 of the screw 20 but to prevent the movement of the head 23 of the screw 20 through the tip 12 of the sleeve 10. In this context the term *axial dimension* refers to the dimension in which the channel 13 of the sleeve 10 extends, i.e. its longitudinal axis. Thus the axial movement of the screw 20 takes place in the direction of the longitudinal axis of the body 11 of the sleeve 10. Thus the narrow section 13b of the channel 13 is in the area of the tip 12 and the wide section 13a in other areas of the body 11, especially in the area of the end flange 14. The diameter d₁₃ₐ of the wide section transforms preferably abruptly into the diameter d_{13b} of the narrow section for forming a shoulder into the channel 13, the shoulder functioning as the bottom for the head 23 of the screw 20. In the example of figures 1 to 5 the shoulder is straight.

The cross-sectional shape of the channel 13 varies along the longitudinal axis. The first section 13a of the channel 13 is non-rotationally symmetrical, i.e. non-circular, in cross-section. In this context, the cross-section is seen as a cross-section in relation to the axial dimension. For example, the cross-section of the channel can be hexagonal, which is a common form used in torque tools. Alternative cross-section forms include e.g. other polygons and oval. According to the embodiment shown in the figures the second section 13b of the channel 13 is circular for facilitating the penetration of the shank 21 of the screw 20. Preferably there is a screw fit between the second section 13b and the shank 21 of the screw 20. The screw fit can be arranged so that as the screw 20 penetrates the second portion 13b, it cuts a thread into the second section 13b of the channel 13 of the sleeve 10. The cutting of the thread can be carried out during assembly by means of, for example, an industrial robot. Alternatively, a female thread can be prefabricated into the second portion 13b. The second portion 13b can alternatively be provided with a thread adapter having a female thread (not shown in the figures) receiving the male thread of the shank 21 of the screw 20. The described thread adapter can be produced as a mould insert, whereby it can be made of a material different from that of the body 11.

The head 23 of the screw 20 is remarkably narrow. The head 23 has a diameter that is preferably only marginally larger than the diameter of the shank 21. The diameter of the head 23 can also be as big as the diameter of the shank 21. The diameter of the shank 21 is taken from the tip of the thread, i.e. it represents the largest diameter of the thread section. The screw 20 is dimensioned so in relation to the sleeve 10 that the screw 20 can be driven through the sleeve 10. In other words, the diameters of the shank 21 and the head 23 of the screw 20 are smaller than the diameter D_{13b} of the wide portion 13b of the channel 13 of the sleeve 10, which allows axial movement of the screw 20 in the channel 13. On the other hand, the screw 20 and the sleeve 10 are dimensioned so that the screw 20 is not allowed to escape from the tip 12 of the sleeve 10. In other words, the diameter of the shank 21 of the screw 20 is dimensioned so as to be a thread fit in relation to the narrow section 13b of the channel 13 of the sleeve 10.

In this context *rotation* refers to a rotation movement around an axis, wherein a rotation of over 360 degrees is allowed.

The fastener according to FIGURES 1 and 2 can be installed as shown in FIGURE 3. FIGURE 3 shows a torque tool 40 for rotating the screw 20 to into the receiving structure 200. In this context, the term "tool" can also be used to indicate a torque tool. In the example shown in the FIGURE the tool 40 is a manual screwdriver, but power tools can also be used. The shaft 41 of the tool 40 is elongated and dimensioned to pass through even a thick covering layer 300. For example, fastening a covering layer 300 with a thickness of 240mm into the receiving structure 200 requires a tool 40 with a shaft 41 of at least 350mm in length. The diameter of the shaft 41 and bit 42 of the tool 40 is selected so that the screwdriver 40 can slide in the channel 13 of the sleeve 10. The cross-sectional shape of the shaft 41 corresponds with the cross-sectional shape of the first section 13a of the channel 13. In other words, it is non-circular, such as hexagonal. The purpose of the shapes of the shaft 41 and the channel 13 is to provide a co-functionality, wherein the first section 13a and the shaft 41 are mutually axially slidable and form-fitting in rotational direction.

One end of the shaft 41 includes a bit 42 arranged to connect with a slot in the head 23 of the screw 20. In the shown example the bit 42 is a Torx head. A drive is provided at the opposite end of the shank for connecting the tool 40 to a driver or a handle for manual rotation (not shown in the drawings). The shaft 41 is a non-rotationally symmetrical, non-circular, such as hexagonal, star-like or other male shape that can connect with the corresponding female non-rotationally symmetrical shape in the first section 13a of the channel 13. Thus the screwdriver 40 can be used for rotating the screw 20 by connecting with the slot 24 in the head 23 thereof, and the sleeve 10 can, on the other hand, be rotated by connecting to the internal mating surface of the first section 13a, which will be described in more detail hereinafter.

The fastener 100 is simple to use. In the beginning the covering layer 300 is positioned over the receiving structure 200 and a pilot hole 201 is produced into the receiving structure 200 by means of a drilling tool (not shown in the drawings). The pilot hole can be, for example, 5mm thick and 30mm long. The drilling tool is selected according to the thickness of the covering layer 300 so that a drilling tool with a length of at least 220 mm is selected for installing a covering layer 300 with a thickness of e.g. 220 mm. During the drilling operation the drill bit penetrates the outer surface 301 of the shell cover 300 and the covering layer and works a pilot hole 201 into the concrete, the depth of the hole being limited by a shoulder at the end of the drill bit. When the pilot hole 201 is ready, the fastener 100 is positioned into the shell cover 300 pushing it in through the pilot hole. Thereby the fastener 100 can be preassembled so that the screw 20 is already in the sleeve 10.

When the sleeve 10 is pushed in, the screw 20 is screwed into the pilot hole 201 by means of a screwdriver 50 that can be rotated manually or by means of a power drill or a mains- or battery-operated power screwdriver (FIGURE 3, right fastener, rotation arrow). When the screw 20 is being rotated by means of the tool 40, the sleeve 10 rotates as well, because there is a sliding form fit between the shaft 41 of the tool 40 and the first portion 13a of the channel 13 of the sleeve 10. As the pilot hole 201 has been drilled to the specified dimension, the installer will feel through the driver when the screw 20 hits the bottom of the pilot hole 201. Thus the screw 20 is deep enough in the receiving structure for providing a sufficient attachment. When the above-described shell cover 300 is installed in concrete, the screw 20 can be, for example, 6,2 x 70 mm concrete screw with T-25 cross slot.

When the screw 20 has been rotated to the pilot hole 201, the installer will check whether the fastener 100 is at the bottom, i.e. whether the end flange 14 of the sleeve 10 is in contact with the outer surface 301 of the shell cover 300. If not (right-hand fastener in FIGURE 3), the fastener 100 must be adjusted to close the gap between the end flange 14 and the outer surface 301 of the shell cover 300. The adjustment is started by lifting the tool 40 in the axial direction indicated by the upwards pointing arrow for detaching the bit 42 of the tool 40 from the head 23 of the screw 20, whereby the rotation movement of the tool 40 is transmitted to the sleeve 10 only (FIGURE 3, right fastener, arrow upwards). When the sleeve 10 is rotated about its longitudinal axis, the thread fit between the second portion 13b of the channel 13 of the sleeve 10 and the shank 21 of the screw 20 transports the sleeve 10 towards the receiving structure 200 while the screw 20 stays in place (FIGURE 3, left fastener, rotation arrow). The screw 20 does not move, because the friction between the screw 20 and the receiving structure 200, such as concrete, is larger than the friction between the screw 20 and the sleeve 10. The sleeve is rotated in relation to the screw 20 until the sleeve 10 has moved so far in axial direction towards the receiving structure 200 that the end flange 14 of the sleeve 10 contacts the outer surface 301 of the shell cover 300.

If a screw provided with a drill tip is fastened to, for example, a wood wall or vertical studs, it is not necessary to produce the pilot hole. The screw can be rotated straight to its place into the receiving structure. In this case it depends on the material of the shell cover whether it is necessary or optional to produce a pilot hole into the shell cover prior to installing the fastener.

FIGURES 4 to 7 show an alternative different from the embodiments of FIGURES 1 to 3 for arranging the fastener 100. In the embodiment of FIGURES 4 to 7 the sleeve 10 is otherwise similar to the embodiment in FIGURES 1 to 3, with the difference that in the embodiment of FIGURES 4 to 7 the end flange 14 is relatively narrow. In the alternative embodiment shown in FIGURES 4 to 7 the fastener 100 comprises a washer 30, separate from the body 10, located between the end flange 14 and the covering layer 300 when installed. Preferably the washer 30 is a piece made of a flexible material, such as plastic, especially polypropene, the purpose of which is to maximize the area by which the fastener 100 is pressed against the covering layer 300. More specifically, the outer ring 31 of the washer 30 is supported by the covering layer 300 on an area larger than the area by which the end flange 14 of the sleeve 10 is supported by the inner ring 30 of the washer 30. The area covered by the washer 30 is preferably at least 50% larger than the area covered by the end flange.

The washer 30 can be produced, for example, by means of injection moulding or other additive manufacturing method. The washer 30 can be generally flat and circular in shape as shown in FIGURES 4 to 7. The washer 30 comprises an outer ring 31 that can be circular in shape or of almost any form in shape, such as an oval or a polygon. In the middle of the washer is an opening 43 limited by the inner edge of the inner ring 33. The purpose of the opening 43 is to accept the body 11 of the sleeve 10, whereby its shape and size are arranged to correspond with the shape and size of the body 11 of the sleeve 10. Preferably the inner ring 33 is concentric with the outer ring 31 so that the washer 30 exerts an even pressure against the covering layer 300. Preferably the inner ring 33 comprises an indentation around the opening 34. The indentation is arranged to receive the end flange 14 of the sleeve 10. In the embodiments shown in FIGURES 4 to 7 the inner and outer ring 33, 31 are arranged to be circular with an empty gap between them. The inner and outer ring 33, 31 are connected by means of an isthmus part 32 comprising a number of parts, e.g. five, extending radially between the inner and outer ring 33, 31. Even though in this illustrative example the isthmus part 32 forms openings between the inner and outer ring 33, 31, it would also be possible to provide a closed isthmus part 32 or an isthmus part of a different shape, such as an isthmus part 32 having spiral or curved connecting parts (not shown in the drawings). The isthmus part can also comprise a smaller or larger number of parts connecting the inner and outer ring 33, 31.

FIGURES 6A to 6C also show that the washer 30 is not completely planar. The outer ring 31 of the washer 30 is offset from the inner ring 33 in axial direction, i.e. in the direction in which the washer 30 is arranged to receive the sleeve 10. When installed, the outer ring 31 is positioned to face the covering layer 300 so that the inner ring 33 is not in contact with the covering layer 300. When the sleeve 10 is tightened to its place, the washer 30 can be compressed to a degree or fully, whereby the inner ring 33 is closer to the surface 301 of the covering layer 300 or in contact with it.

The installation of the fastener 100 according to the embodiment shown in FIGURES 4 to 7 is similar to the installation of the fastener 100 according to the embodiment shown in FIGURES 1 to 3 as far as fastening the screw 20 to the receiving structure 200 and adjusting the sleeve 10 to the correct distance from the receiving structure 200 is concerned. In addition, in the installation method of the fastener 100 shown in FIGURES 1 to 3 the washer 30 is initially positioned to its place by pushing the sleeve 10 through the opening 34 with the tip 12 first. Thus, also the screw 20 pre-installed into the sleeve 10 is pushed through the opening 34 of the washer 30. When the screw 20 is rotated to be in contact with the receiving structure 200, the sleeve 20 is adjusted as described above, until the outer ring 31 of the washer 30 is in contact with the surface 301 of the covering layer 300. If the sleeve 10 is tightened further, the shape of the washer 30 is elastically transformed, whereby the inner ring 33 is pressed towards the surface 301 of the covering layer 300 or contacts it.

FIGURES 8A to 8C show an alternative washer 30. Similar to the washer shown in FIGURES 6A to C, the washer 30 comprises concentric outer and inner rings 31, 33, an isthmus part 32 connecting these as well as an opening 34 arranged into the inner ring 33 for receiving the body 11 of the sleeve 10. The difference to the washer shown in FIGURES 6A to 6C is the design of the isthmus part 32, whereby the arms of the isthmus part are connected to the outer and inner rings 31, 33 by means of rounded forms, whereby the arms of the isthmus part are relatively narrow at the middle section. Thus the openings of the isthmus part are rounded triangles in shape.

FIGURE 9 shows a cross-sectional view of a range of fasteners provided with sleeves of different sizes without the washer. The channel 13 of the sleeve 10 according to the embodiment of FIGURE 9 comprises an optional section 13c. The third section is arranged at the area of the end flange 14. Thus the first section 13a is arranged between the second section 13b arranged within the area of the tip 12 and the third section 13c, when the channel is seen in the axial direction of the body 11. The third section 13c is rotationally symmetrical in cross-section, i.e. circular, which is advantageous for the production. If the sleeve 10 is produced by means of moulding, such as by injection moulding, the split level can be arranged within the level of the end flange 14,whereby the core (not shown in the drawings) forming the channel 13 can be brought through the split level as a stud-like piece, which is advantageous for the manufacturing of the mould.

FIGURE 9 shows a fastener according to an embodiment provided with an optional third section 13c in five different sizes A to E from the smallest to the largest. The washer is omitted in FIGURE 9 to emphasize the size difference. As has been stated above, the present fastener construction makes it possible to provide a modular selection of fastener components, of which the size of the screw 20 and the washer 30 can be standardized, whereby the fastener 100 can be arranged to be suitable for fastening covering layers of different thicknesses by changing the size of the sleeve 10. The range of sleeves of different sizes in FIGURE 9 shows the said conversion.

FIGURE 9 shows five sleeves A to E of different lengths, dimensioned to cooperate with a screw 20 having a shank length of 21 to 70 mm. The outer diameter of the washer (not shown in FIGURE 9) can be, for example, 100 mm, the inner diameter of the opening 34 can be 12.5 mm and the inner diameter of the receiving indentation of the end flange 14 can be 21 mm. Thereby the outer diameter of the end flange 14 and body 11 of the sleeve 10 can be standardized to be e.g. 20 and 12 mm, correspondingly. The dimension of the washer in axial direction can be, for example, 10 mm. The inner diameter of the third section 13c of the channel 13 can be, for example 8.4 mm, whereby the outer diameter of the head 23 of the screw 20 can be 6.8 mm, whereby it can receive a size T25 tool bit. The first and second section 13a, 13b of the channel 13 can also be standardized in size. The length of the first section 13a can be, for example, 75 mm and the length of the second section 13b can be 15 mm. Thereby the tool can also be standardized. These dimensions are concrete examples of standard dimensions of the fastener.

By varying the third section 13c of the channel, fasteners suitable for different sizes of insulation layers can be produced. Table 1 shows examples of dimensions for the length of the body 11 and the third section 13c of the channel 13, measured from the lower surface of the end flange, as well as the suitability of the said fastener for a covering layer of certain thickness.

**Table 1: Suitability of the sleeves of Figure 9.**

| Example | Length of body [mm] | Length of the third section of the channel [mm] | Suitable thickness of covering layer [mm] |
|---|---|---|---|
| A | 95 | 5 | 100 to 120 |
| B | 125 | 35 | 120 to 150 |
| C | 155 | 65 | 150 to 180 |
| D | 185 | 95 | 180 to 210 |
| E | 215 | 125 | 210 to 240 |

Regardless of whether the sleeve comprises a third section 13c of the channel 13 of the sleeve 10 or not, the length of the sleeve 10 can be varied by converting the length of the first section 13a, second section 13b or both sections of the channel 13 or the length of one or two sleeves in a channel comprising more than two sections.

In the above-described embodiments the mutual fastening of the sleeve 10 and the washer 30 of the fastener 100 is based on the tension strength created by the end flange 14 of the sleeve 10 and the corresponding indentation of the shell board 30. The mutual fastening of the sleeve and end flange can also be varied. According to an alternative embodiment (not shown in the drawings) the sleeve can be fastened to the washer with thread fit. The thread fit can be provided by arranging an external thread to the end of the body, whereby the end flange at the place of the thread is optional. Correspondingly, the opening of the washer can be provided with an internal thread, cooperating with the external thread of the sleeve.

Alternatively, the sleeve can comprise grooves arranged on the external surface for receiving lock rings or cotter pins (not shown in the pictures), whereby the end flange of the body can also be optional.

### REFERENCE NUMBER LIST

| Number | Part | Number | Part |
|---|---|---|---|
| 10 | sleeve | 34 | opening |
| 11 | body | 40 | screwdriver |
| 12 | tip | 41 | shaft |
| 13 | channel | 42 | bit |
| 13a | first section | 200 | receiving structure |
| 13b | second section | 201 | hole |
| 13c | third section | 300 | covering layer |
| 14 | end flange | 301 | surface |
| 20 | screw | D₁₁ | outer diameter of body |
| 21 | shank | d₁₃ₐ | inner diameter of the first section of the channel of the sleeve |
| 22 | tip | d_{13b} | inner diameter of the second section of the channel of the sleeve |
| 23 | head | d_{13c} | inner diameter of the third section of the channel of the sleeve |
| 30 | washer | D₁₄ | outer diameter of the end flange |
| 31 | outer ring | D₂₁ | outer diameter of the shank of the screw |
| 32 | isthmus part | D₂₃ | outer diameter of the head of the screw |
| 33 | inner ring | | |

## Claims

1. A fastening kit for fastening a covering layer (300) to a receiving structure (200), the fastening kit comprising a fastener (100), which comprises:
- a sleeve (10), comprising:
o an elongated body (11), which extends between a tip (12) and an end flange (14), wherein the diameter (D14) of the end flange (14) is larger than the diameter (D11) of the body (11), and
o a channel (13), which extends through the body (11) and comprises:
• a first section (13a), which has a non-circular cross-section, and
• a second section (13b), and
- a screw (20), comprising:
o a threaded shank (21), which can be arranged into the first and second section (13a, 13b) of the channel (13), and
o a head (23), which is provided at an end of the shank (21) and which can be slidably fitted to the first section (13a) of the channel (13),
whereby:
- a thread fit between the shank (21) of the screw (20) and the second section (13b) of the sleeve (10), and
- a tool (40), which comprises:
o a shaft (41), which comprises a non-circular cross-section corresponding with the cross-section form of the first section (13b) of the channel (13) of the sleeve (10), whereby the shaft (41) can be arranged into the first section of the channel (13) slidably in axial direction and form-lockingly in rotational direction, and
o a bit (42), which is provided to an end of the shaft (41) to connect with the head (23) of the screw (20) for driving the screw (20) into the receiving structure (200),
whereby the relative axial position of the sleeve (10) and the screw (20) is adjustable by rotating the sleeve (10) in relation to the screw (20) by means of the shaft (41) of the tool (40), when the bit (42) of the tool (40) is detached from the head (23) of the screw (20).

2. The fastening kit according to claim 1, wherein the second section (13b) of the channel (13) is circular in cross-section.

3. The fastening kit according to claim 1 or 2 wherein the channel (13):
- is provided with a first section (13a) having a first inner diameter (d₁₃ₐ) and
- is provided with a second section (13b) having a second inner diameter (d_{13b}) that is smaller than the first inner diameter (d₁₃ₐ)

4. The fastening kit according to any of the previous claims, wherein the diameter of the head (23) of the screw (20) is larger than the second internal diameter (d_{13b}) of the second section (13b) of the channel (13).

5. The fastening kit according to any of the previous claims, wherein the cross-sectional shape of the first section (13a) of the channel (13) is polygonal.

6. The fastening kit according to any of the previous claims, wherein the head (23) of the screw (20) cannot be inserted into the second section (13b) of the channel (13).

7. The fastening kit according to any of the previous claims, wherein the channel (13) comprises a third section (13c), which is arranged within the area of the end flange (14) and which has a circular cross-section, whereby the second section (13b) of the channel (13) is arranged within the area of the tip (12) of the body (11) and the first section (13a) is arranged between the second section (13b) and the third section (13c).

8. The fastening kit according to any of the previous claims, wherein the fastener (100) comprises a washer (30), which is separate from the sleeve, the washer comprising:
- an outer ring (31) and
- an inner ring (33), which is located radially inwards of the outer ring (31), the inner ring comprising an inner edge defining an opening (34) for receiving the body (11) of the sleeve 10).

9. The fastening kit according to claim 8, wherein:
- the washer (30) comprises a first side and a second side, reverse in relation to the first side, and wherein
- the inner ring (33) is arranged to receive the end flange (14) of the sleeve (10) on the first side of the washer (30)

10. The fastening kit according to claim 8 or 9, wherein the washer (30) comprises an isthmus part (32) connecting the outer ring (31) to the inner ring (33).

11. The fastening kit according to any of the previous claims 8 to 10, wherein the washer (30) is arranged to receive the sleeve (10) in axial direction, wherein the outer ring (31) of the washer (30) is offset from the inner ring (33).

12. The fastening kit according to any of the previous claims 8 to 11, wherein the outer ring (31) of the washer (30) is arranged to be supported on one side by the covering layer (300) by a first area, which is larger than a second area, by which the end flange (14) of the sleeve (10) is supported by the inner ring (33) of the washer (30).

13. A method of fastening a covering layer (300) to a receiving structure (200), the method comprising:
- positioning the covering layer (300) over the receiving structure,
- providing a fastening kit according to claim 1,
- connecting the bit (42) of the torque tool (40) to the head (23) of the screw (20) and driving the screw (20) through the covering layer (300) to the receiving structure (200), and
- adjusting the end flange (14) or washer (30) of the sleeve (10) to contact the covering layer (300) by pulling the bit (42) of the torque tool (40) off the head (23) of the screw (20) and by rotating the sleeve (10) in relation to the screw (20) by means of the shaft (41) of the torque tool (40).

## Patentansprüche

1. Befestigungskit zum Befestigen einer Deckschicht (300) an einer Aufnahmestruktur (200), wobei das Befestigungskit ein Befestigungselement (100) umfasst, welches umfasst:
- eine Hülse (10), umfassend:
- einen länglichen Körper (11), der sich zwischen einer Spitze (12) und einem Endflansch (14) erstreckt, wobei der Durchmesser (D14) des Endflansches (14) größer ist als der Durchmesser (D11) des Körpers (11), und
- einen Kanal (13), der sich durch den Körper (11) erstreckt und umfasst:
- einen ersten Abschnitt (13a), der einen nicht kreisförmigen Querschnitt aufweist, und
- einen zweiten Abschnitt (13b) und
- eine Schraube (20), umfassend:
- einen Gewindeschaft (21), der im ersten und zweiten Abschnitt (13a, 13b) des Kanals (13) angeordnet werden kann, und
- einen Kopf (23), der an einem Ende des Schaftes (21) vorgesehen ist und der verschiebbar auf den ersten Abschnitt (13a) des Kanals (13) aufsetzbar ist,
wobei:
- eine Gewindepassung zwischen dem Schaft (21) der Schraube (20) und dem zweiten Abschnitt (13b) der Hülse (10), und
- ein Werkzeug (40), das umfasst:
- eine Welle (41), die einen nicht kreisförmigen Querschnitt umfasst, der der Querschnittsform des ersten Abschnitts (13b) des Kanals (13) der Hülse (10) entspricht, wobei die Welle (41) in axialer Richtung verschiebbar und in Drehrichtung formschlüssig im ersten Abschnitt des Kanals (13) angeordnet werden kann, und
- einen Bit (42), der an einem Ende der Welle (41) vorgesehen ist, um mit dem Kopf (23) der Schraube (20) verbunden zu werden, um die Schraube (20) in die Aufnahmestruktur (200) einzutreiben,
wobei die relative axiale Position der Hülse (10) und der Schraube (20) durch Drehen der Hülse (10) in Bezug auf die Schraube (20) mittels der Welle (41) des Werkzeugs (40) einstellbar ist, wenn der Bit (42) des Werkzeugs (40) vom Kopf (23) der Schraube (20) gelöst ist.

2. Befestigungskit nach Anspruch 1, wobei der zweite Abschnitt (13b) des Kanals (13) einen kreisförmigen Querschnitt aufweist.

3. Befestigungskit nach Anspruch 1 oder 2, wobei der Kanal (13):
- mit einem ersten Abschnitt (13a) versehen ist, der einen ersten Innendurchmesser (d₁₃ₐ) aufweist, und
- mit einem zweiten Abschnitt (13b) versehen ist, der einen zweiten Innendurchmesser (d_{13b}) aufweist, der kleiner ist als der erste Innendurchmesser (d₁₃ₐ).

4. Befestigungskit nach einem der vorstehenden Ansprüche, wobei der Durchmesser des Kopfes (23) der Schraube (20) größer ist als der zweite Innendurchmesser (d_{13b}) des zweiten Abschnitts (13b) des Kanals (13).

5. Befestigungskit nach einem der vorstehenden Ansprüche, wobei die Querschnittsform des ersten Abschnitts (13a) des Kanals (13) polygonal ist.

6. Befestigungskit nach einem der vorstehenden Ansprüche, wobei der Kopf (23) der Schraube (20) nicht in den zweiten Abschnitt (13b) des Kanals (13) eingeführt werden kann.

7. Befestigungskit nach einem der vorstehenden Ansprüche, wobei der Kanal (13) einen dritten Abschnitt (13c) umfasst, der im Bereich des Endflansches (14) angeordnet ist und einen kreisförmigen Querschnitt aufweist, wobei der zweite Abschnitt (13b) des Kanals (13) im Bereich der Spitze (12) des Körpers (11) angeordnet ist und der erste Abschnitt (13a) zwischen dem zweiten Abschnitt (13b) und dem dritten Abschnitt (13c) angeordnet ist.

8. Befestigungskit nach einem der vorstehenden Ansprüche, wobei das Befestigungselement (100) eine Unterlegscheibe (30) umfasst, die von der Hülse getrennt ist, wobei die Unterlegscheibe Folgendes umfasst:
- einen Außenring (31) und
- einen Innenring (33), der radial innerhalb des Außenrings (31) angeordnet ist, wobei der Innenring eine Innenkante umfasst, die eine Öffnung (34) zum Aufnehmen des Körpers (11) der Hülse (10) definiert.

9. Befestigungskit nach Anspruch 8, wobei;
- die Unterlegscheibe (30) eine erste Seite und eine zweite Seite umfasst, die in Bezug auf die erste Seite umgekehrt ist, und wobei
- der Innenring (33) so angeordnet ist, dass er den Endflansch (14) der Hülse (10) auf der ersten Seite der Unterlegscheibe (30) aufnimmt.

10. Befestigungskit nach Anspruch 8 oder 9, wobei die Unterlegscheibe (30) ein Isthmusteil (32) umfasst, das den Außenring (31) mit dem Innenring (33) verbindet.

11. Befestigungskit nach einem der vorstehenden Ansprüche 8 bis 10, wobei die Unterlegscheibe (30) so angeordnet ist, dass sie die Hülse (10) in axialer Richtung aufnimmt, wobei der Außenring (31) der Unterlegscheibe (30) vom Innenring (33) versetzt ist.

12. Befestigungskit nach einem der vorstehenden Ansprüche 8 bis 11, wobei der Außenring (31) der Unterlegscheibe (30) so angeordnet ist, dass er auf einer Seite durch die Deckschicht (300) von einer ersten Fläche gestützt wird, die größer ist als eine zweite Fläche, von der der Endflansch (14) der Hülse (10) durch den Innenring (33) der Unterlegscheibe (30) gestützt wird.

13. Verfahren zum Befestigen einer Deckschicht (300) an einer Aufnahmestruktur (200), wobei das Verfahren umfasst:
- Positionieren der Deckschicht (300) über der Aufnahmestruktur,
- Vorsehen eines Befestigungskits nach Anspruch 1,
- Verbinden des Bits (42) des Drehmomentwerkzeugs (40) mit dem Kopf (23) der Schraube (20) und Eintreiben der Schraube (20) durch die Deckschicht (300) in die Aufnahmestruktur (200), und
- Einstellen des Endflansches (14) oder der Unterlegscheibe (30) der Hülse (10) auf Kontakt mit der Deckschicht (300) durch Abziehen des Bits (42) des Drehmomentwerkzeugs (40) vom Kopf (23) der Schraube (20) und durch Drehen der Hülse (10) relativ zur Schraube (20) mittels der Welle (41) des Drehmomentwerkzeugs (40).

## Revendications

1. Kit de fixation pour fixer une couche de revêtement (300) à une structure de réception (200), le kit de fixation comprenant un dispositif de fixation (100), qui comprend :
- un manchon (10), comprenant :
- un corps allongé (11), qui s'étend entre une pointe (12) et une bride d'extrémité (14), dans lequel le diamètre (D14) de la bride d'extrémité (14) est plus grand que le diamètre (D11) du corps (11), et
- un canal (13), qui s'étend à travers le corps (11) et comprend :
- une première section (13a), qui présente une section transversale non circulaire, et
- une deuxième section (13b), et
- un vis (20), comprenant :
- une tige filetée (21), qui peut être agencée dans la première et la deuxième section (13a, 13b) du canal (13), et
- une tête (23), qui est prévue à une extrémité de la tige (21) et qui peut être montée de manière coulissante sur la première section (13a) du canal (13),
selon lequel :
- un filetage ajusté entre la tige (21) de la vis (20) et la deuxième section (13b) du manchon (10), et
- un outil (40), qui comprend :
- un arbre (41), qui comprend une section transversale non circulaire correspondant à la forme de section transversale de la première section (13b) du canal (13) du manchon (10), selon lequel l'arbre (41) peut être agencé dans la première section du canal (13) de manière coulissante dans la direction axiale et par verrouillage de forme dans la direction de rotation, et
- un embout (42), qui est prévu à une extrémité de l'arbre (41) pour un raccordement à la tête (23) de la vis (20) pour entraîner la vis (20) dans la structure de réception (200),
selon lequel la position axiale relative du manchon (10) et de la vis (20) peut être ajustée en faisant tourner le manchon (10) par rapport à la vis (20) au moyen de l'arbre (41) de l'outil (40) lorsque l'embout (42) de l'outil (40) est détaché de la tête (23) de la vis (20).

2. Kit de fixation selon la revendication 1, dans lequel la deuxième section (13b) du canal (13) est de section transversale circulaire.

3. Kit de fixation selon la revendication 1 ou 2, dans lequel le canal (13) :
- est pourvu d'une première section (13a) présentant un premier diamètre intérieur (d₁₃ₐ) et
- est pourvu d'une deuxième section (13b) présentant un second diamètre intérieur (d_{13b}) qui est plus petit que le premier diamètre intérieur (d₁₃ₐ)

4. Kit de fixation selon l'une quelconque des revendications précédentes, dans lequel le diamètre de la tête (23) de la vis (20) est plus grand que le second diamètre interne (d_{13b}) de la deuxième section (13b) du canal (13).

5. Kit de fixation selon l'une quelconque des revendications précédentes, dans lequel la forme de section transversale de la première section (13a) du canal (13) est polygonale.

6. Kit de fixation selon l'une quelconque des revendications précédentes, dans lequel la tête (23) de la vis (20) ne peut pas être insérée dans la deuxième section (13b) du canal (13).

7. Kit de fixation selon l'une quelconque des revendications précédentes, dans lequel le canal (13) comprend une troisième section (13c) qui est agencée dans la zone de la bride d'extrémité (14) et qui présente une section transversale circulaire, selon lequel la deuxième section (13b) du canal (13) est agencée dans la zone de la pointe (12) du corps (11) et la première section (13a) est agencée entre la deuxième section (13b) et la troisième section (13c).

8. Kit de fixation selon l'une quelconque des revendications précédentes, dans lequel le dispositif de fixation (100) comprend une rondelle (30), qui est séparée du manchon, la rondelle comprenant :
- une bague externe (31) et
- une bague interne (33), qui est située radialement vers l'intérieur de la bague externe (31), la bague interne comprenant un bord interne définissant une ouverture (34) pour recevoir le corps (11) du manchon (10).

9. Kit de fixation selon la revendication 8, dans lequel :
- la rondelle (30) comprend un premier côté et un second côté, inversé par rapport au premier côté, et dans lequel
- la bague interne (33) est agencée pour recevoir la bride d'extrémité (14) du manchon (10) sur le premier côté de la rondelle (30)

10. Kit de fixation selon la revendication 8 ou 9, dans lequel la rondelle (30) comprend une partie isthme (32) reliant la bague externe (31) à la bague interne (33).

11. Kit de fixation selon l'une quelconque des revendications précédentes 8 à 10, dans lequel la rondelle (30) est agencée pour recevoir le manchon (10) dans la direction axiale, dans lequel la bague externe (31) de la rondelle (30) est décalée par rapport à la bague interne (33).

12. Kit de fixation selon l'une quelconque des revendications précédentes 8 à 11, dans lequel la bague externe (31) de la rondelle (30) est agencée pour être supportée sur un côté par la couche de revêtement (300) par une première zone, qui est plus grande qu'une seconde zone, par l'intermédiaire de laquelle la bride d'extrémité (14) du manchon (10) est supportée par la bague interne (33) de la rondelle (30).

13. Procédé de fixation d'une couche de revêtement (300) à une structure de réception (200), le procédé comprenant :
- le positionnement de la couche de revêtement (300) au-dessus de la structure de réception,
- la fourniture d'un kit de fixation selon la revendication 1,
- le raccordement de l'embout (42) de l'outil dynamométrique (40) à la tête (23) de la vis (20) et l'entraînement de la vis (20) à travers la couche de revêtement (300) jusqu'à la structure de réception (200), et
- l'ajustement de la bride d'extrémité (14) ou de la rondelle (30) du manchon (10) pour qu'elle vienne en contact avec la couche de revêtement (300) en retirant l'embout (42) de l'outil dynamométrique (40) hors de la tête (23) de la vis (20) et en faisant tourner le manchon (10) par rapport à la vis (20) au moyen de l'arbre (41) de l'outil dynamométrique (40).
